# EUROPÄISCHE PATENTSCHRIFT

(11) **EP 0 410 283 B1**
(45) Veröffentlichungstag und Bekanntmachung des Hinweises auf die Patenterteilung: **29.12.1993**
(21) Anmeldenummer: 90113730.7
(22) Anmeldetag: 18.07.1990
(51) Int. Cl.: B60H 1/00, F28D 1/047, F25D 17/06

(54) **Heizungs- und/oder Klimaanlage für Kraftfahrzeuge**
Heating and/or air conditioning installation for motor vehicles
Installation de chauffage et/ou de conditionnement d'air pour véhicules automobiles

(30) Priorität: 22.07.1989 DE 3924317
(43) Veröffentlichungstag der Anmeldung: 30.01.1991
(73) Patentinhaber: Bayerische Motoren Werke Aktiengesellschaft, 80788 München (DE)
(72) Erfinder: Andersen, Jürgen, D-8031 Gilching (DE); Möller, Rolf, Dr., D-8031 Gilching (DE); Pfanzeder, Dieter, D-8919 Utting (DE)

(56) Entgegenhaltungen:
- DE-A- 3 738 425
- US-A- 2 153 120
- US-A- 2 277 089
- US-A- 2 334 915
- US-A- 2 349 683

## Beschreibung

Die Erfindung bezieht sich auf eine Heizungs- und/oder Klimaanlage für Kraftfahrzeuge der im Oberbegriff des ersten Anspruchs angegebenen Art.

Die DE-A-37 38 425 beschreibt eine Klimatisierungseinrichtung für Kraftfahrzeuge mit einem ringförmig gebogenen Wärmetauscher. Bei dieser Einrichtung sitzt das Gebläse zentral innerhalb des vom Wärmetauscher umschlossenen Raumes. Ebenfalls ist ein zentral angeordneter Lufteinlaßkanal sowie von der Warmluftseite abzweigende Kanäle zur Frontscheibe und zum Fußraum sowie ein axial versetzt abzweigender Frischluftkanal vorgesehen. Hierdurch wird eine platzsparende Heizungsanlage für Kraftfahrzeuge geschaffen. Die Erweiterung zur Klimaanlage kann hierbei durch einen im zentral angeordneten Lufteinlaßkanal vorgesehenen üblichen Verdampfer einer bekannten Klimaanlage erzielt werden.

Der Nachteil der bekannten Heizungsanlage besteht darin, daß der Zulauf- und Ablaufwasserkasten im Frischluftraum angeordnet sind, so daß bei eingeschalteter Heizung dort immer temperierte Luft austritt. Weiterhin ist keine Rechts-Links-Regelung in der Luftverteilung möglich.

Aufgabe der vorliegenden Erfindung ist es, hier Abhilfe zu schaffen und eine Heizungs- und/oder Klimaanlage der eingangs genannten Art derart auszubilden, daß sie bei kleinem Platzbedarf gestattet, in der Luftverteilung als auch bei der Lufttemperierung eine Rechts-Links-Regelung vorzunehmen und gleichzeitig bei Heizungsbetrieb unbehandelte Frischluft zu den Belüftungsdüsen liefert.

Diese Aufgabe wird erfindungsgemäß durch die kennzeichnenden Merkmale des ersten Anspruchs gelöst. Durch die U-förmige Biegung des Wärmetauschers bleibt ein Bereich frei, in dem weder die Wasserkästen noch die Zu- und Ableitungen des Heizungswärmetauschers verlaufen müssen. Dadurch eignet sich dieser Raum hervorragend zum Anschluß des Auslaßkanals zur Belüftung. Dadurch erhält man einen quasi Ringheizkörper, der in der Nabe einen zentralen Frischlufteinlaß aufweist und radial hinter dem Wärmetauscher einen Warmluftraum aufweist, von dem symmetrisch dann die einzelnen Kanäle für die rechte und linke Fahrzeugseite abzweigen können. Damit ist es möglich, in diese Kanäle separat ansteuerbare Klappen anzuordnen, so daß Fahrer und Beifahrer die Luftverteilung unabhängig voneinander vornehmen können.

Zur unabhängigen Lufttemperierung für die rechte und linke Fahrzeughälfte ist der Wärmetauscher zweigeteilt ausgeführt. Somit können am Grunde (Steg) des U-förmig gebogenen Wärmetauschers der gemeinsame Zulauf- oder Ablaufkasten für die beiden funktionell geteilten Wärmetauscher vorgesehen werden. Die freien Schenkel des U's beherbergen dann den Ablauf- bzw. Zulaufwasserkasten.

Die Weiterbildung nach Anspruch 2 beschreibt eine bevorzugte Anordnung des Wärmetauschers. Die Anordnung der Auslaßkanäle ist hierbei in beiden Fällen gleich.

Die Weiterbildung nach Anspruch 3 gestattet die Temperierung des Luftstromes zur Belüftung. Auch hier kann eine Rechts-Links-Regelung dann erreicht werden, wenn in jedem Auslaßkanal eine separat ansteuerbare Klappe vorgesehen ist. Hierbei kann die Temperierung sowohl bei einem einzigen Wärmetauscher als auch bei dem Vorsehen von zwei Wärmetauschern durchgeführt werden. Im letzteren Fall ist der Belüftungskanal quergeteilt ausgeführt, wie Anspruch 4 vorschlägt.

Prinzipiell ist es möglich, den Verdampfer einer separaten Kälteanlage in dem zentral angeordneten Lufteinlaßkanal vorzusehen.

Im folgenden wird die Erfindung anhand eines bevorzugten Ausführungsbeispiels näher dargestellt. Es zeigen:
- Fig. 1: einen Querschnitt durch eine erfindungsgemäß aufgebaute Fahrzeugheizung;
- Fig. 2: einen Längsschnitt durch die Anlage nach Fig. 1;
- Fig. 3: einen Schnitt der Anlage nach Fig. 1;
- Fig. 4: einen Schnitt der Anlage nach Fig. 1 mit vorgeschaltetem Verdampfer und Partikelfilter.

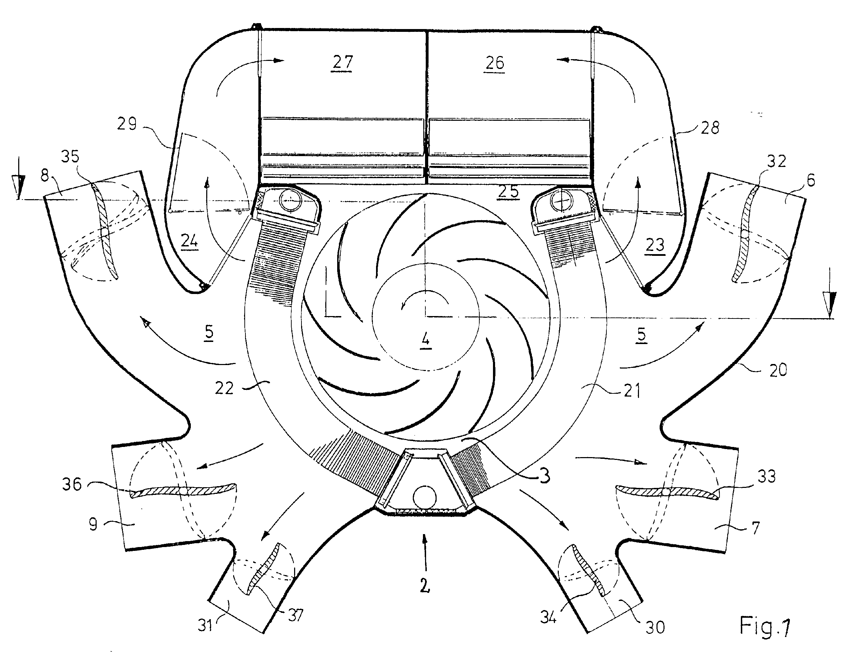

In Fig. 1 ist ein schematisierter Querschnitt durch eine Heiz- und/oder Klimaanlage für den Innenraum eines Fahrzeugs dargestellt. Die Heizungs- und/oder Klimaanlage weist ein Gehäuse 20 auf, in dem ein Wärmetauscher 2 U-förmig gebogen angeordnet ist. Er besteht aus zwei zu einem U zusammengesetzte Wärmetauscher bzw. Wärmetauscherteile 21 und 22. Die Anordnung des Wärmetauschers 2 ist so gewählt, daß die beiden Schenkel des U's nach oben weisen.

In dem von dem Wärmetauscher umschlossenen Kaltluftraum 3 sitzt ein Radialgebläse 4, welches Umgebungsluft von einem hier nicht dargestellten Lufteinlaßkanal ansaugt, radial umlenkt und durch den Wärmetauscher 2 führt. Auf der dem Gebläse 4 abgewandten Seite des Wärmetauschers 2 befindet sich der Warmluftraum 5, von dem symmetrisch zur Vertikalen die Auslaßkanäle für die Frontscheibe und den Fußraum abzweigen. Hierbei ist der Auslaßkanal zur rechten Frontschreibenhälfte mit 6 und der Auslaßkanal zur rechten Fußraumseite mit 7 bezeichnet. Die Auslaßkanäle für die entsprechenden Bereiche der linken Seite sind mit 8 und 9 bezeichnet.

Die Auslaßkanäle 30, 31 führen zum rechten bzw. linken Fondraum des Fahrzeugs. In jedem Auslaßkanal ist eine frei ansteuerbare Steuerklappe 32 bis 37 angeordnet, um den Luftdurchtritt individuell einzustellen.

Oberhalb des Wärmetauschers 2 ist ein Frischluftraum 25 vorgesehen, welcher über Kanäle mit den Belüftungsdüsen zum Kopfbereich verbunden ist.

Im Bereich der freien Schenkel des U's führen weiterhin zwei Bypass-Kanäle 23 und 24 zu dem Frischluftraum 25, der in diesem Beispiel in die beiden Hälften 26 und 27 unterteilt ist. Zu Beginn eines jeden Bypass-Kanals ist eine Rückschlagklappe 28, 29 angeordnet, die eine Rückströmung von unbehandelter (kalter) Außenluft bei geschlossenen Auslaßkanälen 23 bzw. 24 (beispielsweise an deren Austrittsende) verhindert.

Aufgrund der U-förmigen Ausführung des Wärmetauschers 2 und seine zum Frischluftraum 25 hin weisenden Schenkel kann die angesaugte Umgebungsluft durch den Einlaßkanal ohne Durchströmen des Wärmetauschers 2 direkt zu dem Frischluftraum 25 strömen. Somit ist unabhängig vom Arbeiten der Heizungsanlage gewährleistet, daß im Frischluftraum 25 immer unbehandelte Umgebungsluft zur Verfügung steht.

Aufgrund der getrennt aus dem Warmluftraum 5 abzweigenden Auslaßkanäle 6, 7 und 30 bzw. 8, 9 und 31 und die ihnen zugeordneten Verteilerklappen 32 bis 37 ist es ebenfalls möglich, eine für die rechte und linke Fahrzeugseite getrennte Luftverteilung vorzunehmen.

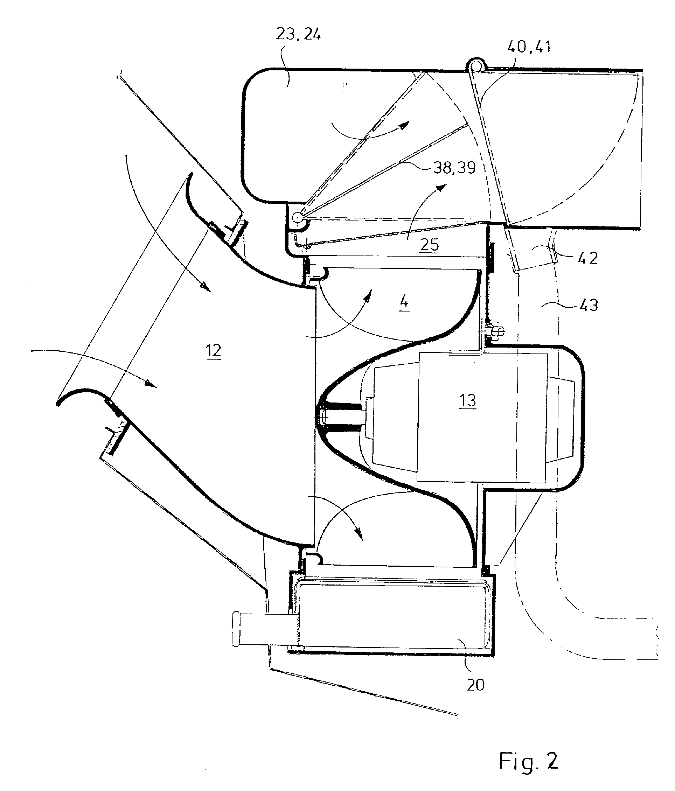

Die beiden Wärmetauscherteile 21 und 22 können in bekannter Weise an den Kühlkreislauf einer das Fahrzeug antreibenden Brennkraftmaschine angeschlossen und in ihrer Heizleistung gesteuert werden. Aufgrund der individuell einstellbaren Wärmetauscherhälften 21 und 22 und der individuellen Ansteuerung der einzelnen Auslaßkanäle für die rechte und linke Seite über die zugeordneten Steuerklappen kann sehr individuell die Temperatur im Fahrzeug beeinflußt werden. Die einzelnen Steuerklappen können über Stellmittel von Hand oder mit Hilfe von zugeordneten Stellmotoren individuell oder durch ein geeignetes Programm gesteuert werden. Darüber hinaus ist es auch möglich, in dem gemeinsamen Lufteinlaßkanal 12 (Fig. 2) einen üblichen Verdampfer einer üblich aufgebauten Kältemittelanlage einzubauen.

In Fig. 2 ist ein Querschnitt durch das Gehäuse 20 der Anlage nach Fig. 1 dargestellt. Hier ist der axial angeordnete Lufteinlaßkanal 12, ebenso wie der axial angeordnete Antriebsmotor 13 für das Radialgebläse 4 sichtbar sowie die in jeder Hälfte 26 und 27 des Frischluftraumes 25 zur Belüftung vorgesehene Steuerklappe 38, 39, die den Anteil der unbehandelten Frischluft steuert. Dadurch kann zum einen durch die eingestellte Temperatur am Wärmetauscher 21 bzw. 22 und dem Öffnungs- bzw. Schließwinkel der Steuerklappen 38 bzw. 39 eine individuelle Temperaturschichtung an den Belüftungsdüsen für die rechte und linke Seite erzielt werden.

Fernerhin ist noch in Fig. 2 die in jeder Belüftungskanalhälfte 26 und 27 vorhandene Absperrklappe 40, 41 zum vollständigen Versperren des zugeordneten Belüftungskanales dargestellt.

Eine Belüftung des Fondraumes mit Austrittsöffnung, beispielsweise zwischen den beiden Frontsitzen, kann über einen an dem linken oder rechten Belüftungskanal abzweigenden Anschluß 42 und einem daran angeschlossenen Belüftungskanal 43 erfolgen.

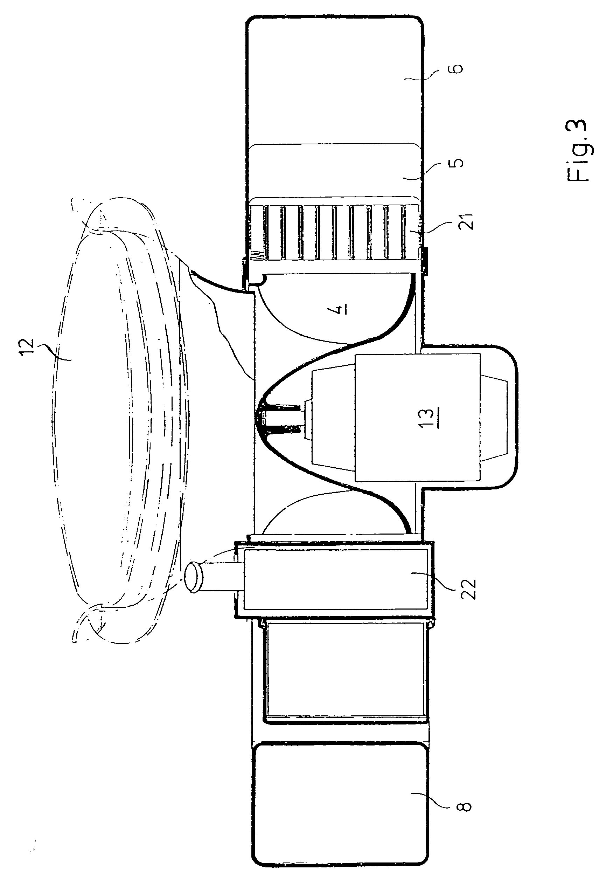

In Fig. 3 ist ein Schnitt durch das Gehäuse 20 nach Fig. 1 dargestellt. Hieran ist sehr gut zu erkennen, daß die erfindungsgemäß aufgebaute Heizungsanlage nur eine sehr geringe Tiefe aufweist und trotzdem sich sehr individuell einstellen läßt.

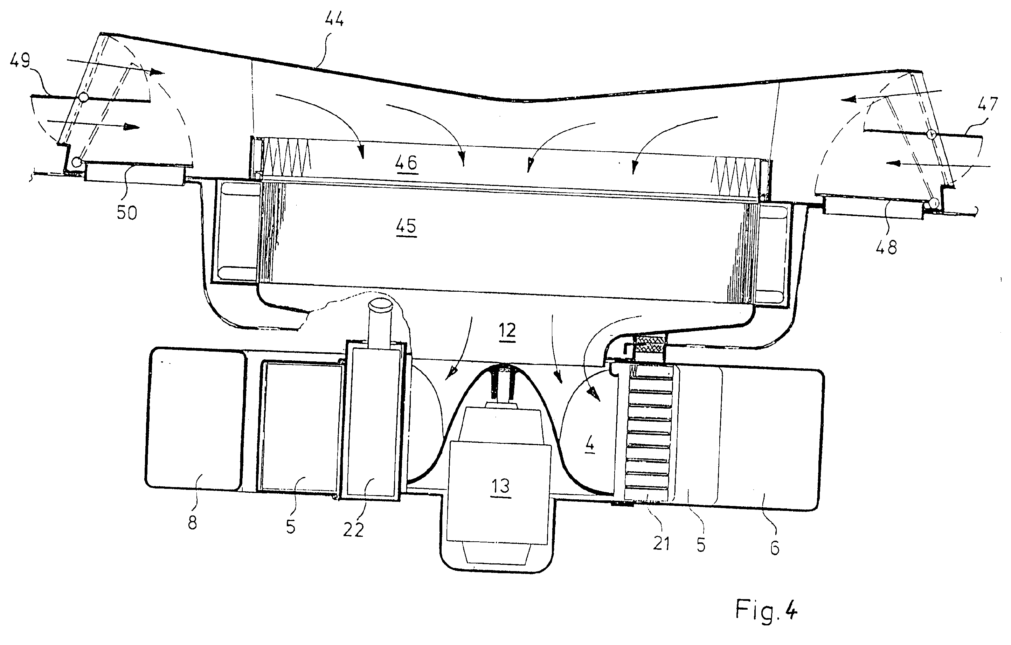

In Fig. 4 ist eine Erweiterung der zuvor beschriebenen Heizungsanlage zu einer Heizungs- und Klimaanlage dargestellt. Hierzu ist in Strömungsrichtung der Frischluft vor dem Wärmetauscher 22 in einem separaten Gehäuse 44 ein Verdampfer 45 sowie zusätzlich ein Partikelfilter 46 vorgesehen. Weiterhin besitzt dieses Gehäuse Frischluftklappen 47, 49 und Umluftklappen 48, 50, die vor dem Lufteinlaßkanal 12 und, im dargestellten Beispiel, außerhalb des Innenraumes des Fahrzeugs angeordnet sind.

Eine Anordnung des Gehäuses 44 im Fahrgastinnenraum, sowie die Zusammenfassung der Gehäuse 20 und 44 zu einem gemeinsamen Gehäuse ist möglich. Es ist ferner möglich, die Verdampfereinheit seitlich neben der Heizungsanlage anzuordnen und mittels eines Zuströmkanals zu verbinden. Der Vorteil einer gegenüber konventionellen Heizungs- und Klimaanlagen deutlich geringeren Bautiefe ist bei allen Ausführungsbeispielen beibehalten.

## Patentansprüche

1. Heizungs- und/oder Klimaanlage für Kraftfahrzeuge mit einem ringartig gebogenen Wärmetauscher (2), der an einem Heiz- und/oder Kühlkreislauf angeschlossen und in einem Gehäuse (1) angeordnet ist, das mindestens einen zentral angeordneten Lufteinlaßkanal (Kaltluftraum 3), ein im Zentrum des Wärmetauschers (2) und von diesem umhüllten Gebläse (4) zur Erhöhung der zu fördernden Luftmenge aufweist und von dem mindestens ein am Umfang des Wärmetauschers (2) von dessen Warmluftraum (5) abzweigender Auslaßkanal (6) zur Frontscheibe und zum Fußraum (7) des Fahrgastraumes des Kraftfahrzeuges und ein Frischluftraum (10, 25) mit einem Auslaßkanal zur Belüftung im offenen Bereich des Wärmetauschers (2) abzweigt,
dadurch gekennzeichnet, daß der Wärmetauscher (2) U-förmig gebogen ist, daß der Frischluftraum (10, 25) frei von Zu-/Ableitungen des Wärmetauschers (2) ist, daß der Wärmetauscher (2) zweigeteilt ist, wobei im Bereich der Teilung des Wärmetauschers (2) dieser warmluftseitig an der Gehäusewand anliegt und daß die Auslaßkanäle (6, 7 und 8, 9) zum Fußraum und zur Frontscheibe für jede Fahrzeugseite getrennt abzweigen, so daß eine recht/links getrennte Luft- und Temperaturregelung möglich ist.

2. Heizungsanlage nach Anspruch 1,
dadurch gekennzeichnet, daß der Wärmetauscher (2) in Einbaulage der Heizungs- und/oder Klimaanlage stehend mit nach oben offenem Bereich angeordnet ist.

3. Heizungsanlage nach einem der vorangegangenen Ansprüche,
dadurch gekennzeichnet, daß im Bereich der oberen Schenkel des Wärmetauschers (2) Verbindungskanäle (23,24) von der Warmluftseite (5) zum Frischluftraum (25) verlaufen.

4. Heizungsanlage nach Anspruch 4,
dadurch gekennzeichnet, daß der Frischluftraum (25) quergeteilt (Hälfte 26,27) zur Rechts-Links-Regelung ist.

## Claims

1. A heating and/or air conditioning installation for motor vehicles with an annular, curved heat exchanger (2) which is connected to a heating and/or cooling circuit and is arranged in a housing (1) provided with at least one centrally-arranged air inlet duct (cold air chamber 3), a blower (4) to increase the volume of air conveyed arranged in the central region of the heat exchanger (2) and circumscribed by it, and from which at least one outlet duct (6) branches at the periphery of the heat exchanger (2) from its hot air chamber (5) to the front windscreen and to the footwell (7) of the passenger zone of the motor vehicle and a fresh air chamber (10, 25) with an outlet duct for ventilation in the open area of the heat exchanger (2),
characterised in that the heat exchanger (2) is bent into a U-shape, that the fresh air chamber (10, 25) is free from the inlet and outlet lines of the heat exchanger (2), that the heat exchanger (2) is divided in two and abuts the housing wall on the hot air side in the region where it divides, and that the outlet ducts (6, 7 and 8, 9) branch separately to the footwell and to the front windscreen on each side of the vehicle so that right-left separate air and temperature control is possible.

2. A heating installation according to Claim 1,
characterised in that the heat exchanger (2), when installed in the heating and/or air conditioning installation, is arranged vertically with an open region facing upwards.

3. A heating installation according to either one of the preceding Claims,
characterised in that connecting ducts (23, 24) lead from the hot air side (5) to the fresh air chamber (25) in the region of the upper limb of the heat exchanger (2).

4. A heating installation according to Claim 4,
characterised in that the fresh air chamber (25) is divided transversely (halves 26, 27) for right-left control.

## Revendications

1. Installation de chauffage et/ou de conditionnement d'air pour véhicules automobiles avec un échangeur de chaleur (2) recourbé à la manière d'un anneau et raccordé à un circuit de chauffage et/ou de refroidissement en étant disposé dans un carter (1), qui présente au moins un canal d'entrée d'air disposé au centre (espace d'air froid 3), une soufflante (4) au centre de l'échangeur de chaleur (2) entouré par celui-ci pour augmenter le débit de l'air à refouler, et duquel part en dérivation au moins un canal de sortie (6) partant en dérivation sur le pourtour de l'échangeur de chaleur (2), de son espace (5) d'air chaud vers le pare-brise et vers les pieds des passagers (7) du véhicule automobile, et un espace (10, 25) d'air frais muni d'un canal de sortie pour la ventilation dans la zone libre de l'échangeur de chaleur (2).
installation de chauffage et/ou de conditionnement d'air caractérisée en ce que l'échangeur de chaleur (2) est recourbé en forme de U, en ce que l'espace (10, 25) d'air frais est libre de conduites d'entrée/sortie de l'échangeur de chaleur (2), en ce que l'échangeur de chaleur (2) est en deux parties, celui-ci reposant sur la paroi du carter dans la zone où il est partagé, et en ce que les canaux de sortie (6, 7 et 8, 9) allant vers les pieds des passagers et au pare-brise partent en dérivation de façon séparée pour chaque côté du véhicule, de telle sorte qu'on peut avoir un réglage séparé droite/gauche de l'air et de la température.

2. Installation de chauffage, caractérisée en ce que l'échangeur de chaleur (2), dans la position de montage de l'installation de chauffage et/ou de conditionnement d'air, est disposé avec une zone ouverte vers le haut.

3. Installation de chauffage selon les revendications précédentes, caractérisée en ce que dans la zone des branches supérieures de l'échangeur de chaleur (2), s'étendent des canaux de liaison (23, 24) depuis le côté (5) de l'air chaud jusqu'à l'espace (25) de l'air frais.

4. Installation de chauffage selon la revendication 3, caractérisée en ce que l'espace (25) de l'air frais est divisé transversalement (moitiés 26, 27) pour procurer une régulation droite/gauche.
